(19) Europäisches Patentamt
European Patent Office
Office européen des brevets

(11) **EP 3 396 206 A1**

(12) **EUROPEAN PATENT APPLICATION**

(43) Date of publication:
**31.10.2018 Bulletin 2018/44**

(51) Int Cl.:
**F16H 37/08** (2006.01) **F16H 3/72** (2006.01)

(21) Application number: **18169473.8**

(22) Date of filing: **26.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2017 JP 2017090064**

(71) Applicant: **TOYOTA JIDOSHA KABUSHIKI KAISHA**
**Toyota-shi, Aichi 471-8571 (JP)**

(72) Inventor: **ISONO, Hiroshi**
**Toyota-shi,, Aichi 471-8571 (JP)**

(74) Representative: **TBK**
**Bavariaring 4-6**
**80336 München (DE)**

(54) **GEARED TRANSMISSION UNIT**

(57) A geared transmission unit that can increase a speed increasing or reducing ratio without increasing a size of the geared transmission unit. In the geared transmission unit 1, torque is transmitted between an input shaft 2 and an output shaft 3. The geared transmission unit 1, comprises: a planetary gear set 4; an external gear 11 formed around a ring gear 8; a center gear 15 that rotates integrally with the sun gear 7; a sun gear shaft 12 that rotates integrally with the center gear 15 and the sun gear 7; a carrier shaft 13 that rotates integrally with the carrier 9; a first pinion 18 that engages with the external gear 11; a second pinion 19 that rotates integrally with the first pinion 18; a pinion shaft 20 that rotates integrally with the first pinion 18 and the second pinion 19; and a counter gear 16 that engages with the center gear 15 and the second pinion 19. The sun gear shaft 12 or the pinion shaft 20 serves as the input shaft 2, and the carrier shaft 13 serves as the output shaft 3.

Fig. 2

EP 3 396 206 A1

## Description

## CROSS REFERENCE TO RELATED APPLICATION

The present invention claims the benefit of Japanese Patent Application No. 2017-090064 filed on April 28, 2017, with the Japanese Patent Office.

## BACKGROUND

## Field of the Disclosure

Embodiments of the present disclosure relate to the art of a geared transmission unit for transmitting power through a planetary gear set.

## Discussion of the Related Art

JP-A-2008-275112 describes a high reduction combined planetary gear mechanism including a first planetary gear mechanism and a second planetary gear mechanism. The first planetary gear mechanism has a first sun gear, a first ring gear, and a first carrier. Similarly, the second planetary gear mechanism has a second sun gear, a second ring gear, and a second carrier. In the combined planetary gear mechanism, the first sun gear and the second sun gear are coupled on the same rotational axis, the first ring gear and the second ring gear are integrated, and the second carrier is fixed to a stationary frame. The second sun gear and the first sun gear serve as an input shaft, and the first carrier serves as an output shaft.

According to the teachings of JP-A-2008-275112, by the plurality of planetary gears held by the second carrier whose rotation has been stopped being disposed in a non-axisymmetrical manner, flexibility in choice of the number of teeth increases by a multiple of the number of planetary gears (Np) (i.e., by Np times). By flexibility in choice of the number of teeth increasing by Np times, it is made possible to obtain a high speed reduction ratio of Np times a conventional configuration.

As described above, the combined planetary gear mechanism described in JP-A-2008-275112 can obtain a larger speed reduction ratio than a single planetary gear mechanism. Moreover, the speed reduction ratio can be made larger by increasing the number of planetary gears. However, according to the teachings of JP-A-2008-275112, the combined planetary gear mechanism is configured by coupling two sets of the planetary gear mechanism by a common ring gear. Therefore, the number of planetary gears is restricted by the number of teeth or internal diameter of the ring gear which is an internal gear. For this reason, increase in the speed reduction ratio also ends up being limited.

## SUMMARY

Aspects of embodiments of the present disclosure have been conceived noting the foregoing technical problems, and it is therefore an object of embodiments of the present disclosure to provide a geared transmission unit that can achieve a greater speed ratio without increasing a size of the geared transmission unit.

The embodiment of the present disclosure relates to a geared transmission unit comprising: an input shaft; an output shaft; and a planetary gear set that performs a differential action among a sun gear, a ring gear, and a carrier. In the geared transmission unit, a torque is transmitted between the input shaft and the output shaft while increasing or decreasing a rotational speed. In order to achieve the above-explained objective, according to the embodiment of the present disclosure, the geared transmission unit is provided with: an external gear that is formed in an outer peripheral section of the ring gear; a center gear that is disposed coaxially with the sun gear and rotates integrally with the sun gear; a sun gear shaft that rotates integrally with the center gear and the sun gear; a carrier shaft that rotates integrally with the carrier; a first pinion that engages with the external gear; a second pinion that is disposed coaxially with the first pinion and rotates integrally with the first pinion; a pinion shaft that rotates integrally with the first pinion and the second pinion; a counter gear that is disposed between the center gear and the second pinion and engages with both of the center gear and the second pinion; and a counter gear shaft that rotates integrally with the counter gear.

In a non-limiting embodiment, any of the sun gear shaft, the pinion shaft, and the counter gear shaft may serve as any one of the input shaft and the output shaft, and the carrier shaft may serve as the other one of the input shaft and the output shaft.

In a non-limiting embodiment, the sun gear shaft may serve as the input shaft, and the carrier shaft may serve as the output shaft.

In a non-limiting embodiment, the pinion shaft may serve as the input shaft, and the carrier shaft may serve as the output shaft.

In a non-limiting embodiment, the geared transmission unit may comprise a plurality of the input shafts. In addition, the sun gear shaft and the pinion shaft may respectively serve as the input shaft, and the carrier shaft may serve as the output shaft.

In a non-limiting embodiment, the geared transmission unit may comprise: a plurality of the input shafts; a plurality of the first pinions; a plurality of the second pinions; and a plurality of the pinion shafts. In addition, at least two of the pinion shafts may serve as the input shafts.

In a non-limiting embodiment, the sun gear shaft and at least two of the pinion shafts may serve as the input shafts.

In a non-limiting embodiment, the geared transmission unit may comprise a plurality of the input shafts. In addition, both ends of at least one of the pinion shafts may serve as the input shafts.

In a non-limiting embodiment, the counter gear shaft may serve as the input shafts, and the carrier shaft may serve as the output shaft.

In a non-limiting embodiment, the geared transmission unit may comprise: a plurality of the input shafts; a plurality of the counter gears; and a plurality of the counter gear shafts. In addition, the counter gear shafts may serve as the input shafts.

In a non-limiting embodiment, the geared transmission unit may comprise: a driving actuator that generates a drive torque; and a braking actuator that generates a braking torque. In addition, the driving actuator may be coupled to a first input shaft of a plurality of the input shafts, and the braking actuator may be coupled to a second input shaft of a plurality of the input shafts.

In a non-limiting embodiment, the pinion shaft projecting in a same direction as a projecting direction of the output shaft may serve as the input shaft.

In a non-limiting embodiment, the geared transmission unit may comprise: a plurality of the input shafts; a plurality of the first pinions; a plurality of the second pinions; and a plurality of the pinion shafts. In addition, at least two of the pinion shaft projecting respectively in a same direction as a projecting direction of the output shaft may serve as the input shafts.

In a non-limiting embodiment, the geared transmission unit may comprise: a driving actuator that generates a drive torque; and a braking actuator that generates a braking torque. In addition, the driving actuator may be coupled to a first input shaft of a plurality of the input shafts, and the braking actuator may be coupled to a second input shaft of a plurality of the input shafts.

In a non-limiting embodiment, the carrier shaft may serve as the input shaft, and any of the sun gear shaft, the pinion shaft, and the counter gear shaft may serve as the output shaft.

In a non-limiting embodiment, the carrier shaft may serve as the input shaft, and the sun gear shaft may serve as the output shaft.

Thus, according to the embodiment of the present disclosure, the external gear may be formed around the ring gear of the planetary gear set to be meshed with the first pinion so that the torque is transmitted between the ring gear and the center gear through the second pinion rotating integrally with the first pinion and the counter gear meshing with the second pinion. The center gear may be coupled to the sun gear of the planetary gear set through the sun gear shaft to be rotated integrally with the sun gear. When a torque is applied to the carrier or the sun gear of the planetary gear set, the torque is delivered from the center gear to the ring gear through the counter gear, the second pinion, and the first pinion. In this situation, the first pinion is rotated in the same direction as the rotational direction of the center gear and the sun gear. Consequently, the ring gear is rotated in the opposite direction to the rotational direction of the sun gear and the carrier. According to the embodiment of the present disclosure, therefore, a speed ratio can be increased compared to that of a conventional planetary gear set in which a speed ratio between the sun gear and the carrier is changed while stopping a rotation of the ring gear. In addition, according to the embodiment of the present disclosure, the speed ratio between the sun gear and the carrier may be increased without increasing a size of the geared transmission unit. The geared transmission unit thus structured may be used not only as a speed increasing apparatus but also as a speed reducing apparatus.

According to the embodiment of the present disclosure, power transmission may be made between the planetary gear set and an input shaft or the output shaft by the external gear formed around the ring gear. Therefore, restrictions due to the number of planetary gears or number of teeth of the planetary gears of the planetary gear unit are more relieved, compared to in a conventional geared transmission unit in which rower transmission is made by internal teeth of the ring gear. For this reason, a flexibility of a speed increasing ratio or a speed reducing ratio may be increased to archive a larger speed increasing ratio or speed reducing ratio.

According to the embodiment of the present disclosure, torque may be applied to the sun gear shaft serving as the input shaft, and the torque may be delivered to the carrier shaft serving as the output shaft. Therefore, the speed reducing ratio between the input shaft and the output shaft may be increased significantly. In addition, since the input shaft and the output shaft are arranged coaxially, the geared transmission unit according to the embodiment of the present disclosure may be fitted easily in a linear powertrain of automobiles or industrial machineries.

According to the embodiment of the present disclosure, the pinion shaft integrated with the first pinion and the second pinion may serve as the input shaft to which the torque is applied. In the geared transmission unit, therefore, the input shaft and the carrier shaft serving as the output shaft may be arranged on different axes. In other words, the input shaft and the output shaft may be arranged eccentrically from each other. For this reason, the geared transmission unit may be applied flexibly to different kinds of powertrains.

According to the embodiment of the present disclosure, the sun gear shaft and the pinion shaft may serve as the input shafts. That is, torque may be inputted to different shafts. For this reason, the geared transmission unit may be applied flexibly to different kinds of powertrains.

According to the embodiment of the present disclosure, a plurality of sets of the first pinion, the second pinion, and the pinion shaft may be arranged in the geared transmission unit, and each of the pinion shafts may serve as the input shaft. That is, torque may be inputted to different shafts. For this reason, the geared transmission unit may be applied flexibly to different kinds of powertrains.

According to the embodiment of the present disclosure, a plurality of sets of the first pinion, the second pinion, and the pinion shaft may be arranged in the geared transmission unit, and the sun gear shaft and the pinion shafts may serve as the input shafts. That is, torque may be inputted to different shafts. For this reason, the geared transmission unit may be applied flexibly to different kinds of powertrains.

According to the embodiment of the present disclosure, both ends of the pinion shaft may serve as the input shafts. That is, the input shafts may be arranged in such a manner as to project in different directions. In the geared transmission unit, therefore, one end of the input shaft 2 may be connected to a normally used braking actuator, and the other end of the input shaft 2 may be connected to a braking actuator. Thus, In this case, the geared transmission unit may also serve as a brake unit having a parking brake.

According to the embodiment of the present disclosure, the counter gear shaft rotated integrally with the counter gear may serve as the input shaft. In the geared transmission unit, therefore, the input shaft and the carrier shaft serving as the output shaft may be arranged on different axes. In other words, the input shaft and the output shaft may be arranged eccentrically from each other. For this reason, the geared transmission unit may be applied flexibly to different kinds of powertrains.

According to the embodiment of the present disclosure, a plurality of the counter gears and a plurality of the counter gear shafts may be arranged in the geared transmission unit, and each of the counter shafts may serve as the input shafts. That is, torque may be inputted to different shafts. For this reason, the geared transmission unit may be applied flexibly to different kinds of powertrains.

According to the embodiment of the present disclosure, the driving actuator such as a motor may be coupled to the first input shaft to apply a driving torque to the first input shaft, and the braking actuator such as an electromagnetic brake or a regenerative brake may be coupled to the second input shaft to apply a braking torque to the second input shaft. Thus, the geared transmission unit may serve as a drive unit having a braking function.

According to the embodiment of the present disclosure, the pinion shaft projecting in the same direction as the projecting direction of the output shaft may serve as the input shaft. Therefore, the geared transmission unit may be used to form an in-wheel motor in which a motor and a driveshaft are arranged inside of a wheel, by coupling the input shaft to the motor and coupling the output shaft to the driveshaft. Otherwise, it is also possible to form a drive unit having two motors by arranging two of the geared transmission unit thus having the motor in such a manner as to have their fellow back surfaces on an opposite side to the input shaft and the output shaft against each other.

According to the embodiment of the present disclosure, a plurality of sets of the first pinion, the second pinion, and the pinion shaft may be arranged in the geared transmission unit, and at least two of the pinion shaft projecting respectively in the same direction as the projecting direction of the output shaft may serve as the input shafts. The geared transmission unit thus structured may also be used to form an in-wheel motor by coupling the input shafts to the motor and the brake, and coupling the output shaft to the driveshaft. Otherwise, it is also possible to form a drive unit having two motors and a braking function by arranging two of the geared transmission unit in such a manner as to have their fellow back surfaces on an opposite side to the input shaft and the output shaft against each other.

As described, according to the embodiment of the present disclosure, the driving actuator may be coupled to the first input shaft, and the braking actuator may be coupled to the second input shaft. Therefore, the geared transmission unit may serve as a drive unit having a braking function.

According to the embodiment of the present disclosure, torque may be applied to the carrier shaft serving as the input shaft, and the torque may be delivered to any of the sun gear shaft, the pinion shaft, and the counter gear shaft serving as the output shaft. In this case, a rotational speed of the output shaft may also be increased significantly with respect to a rotational speed of the input shaft.

According to the embodiment of the present disclosure, torque may be applied to the carrier shaft serving as the input shaft, and the torque may be delivered to the sun gear shaft serving as the output shaft. In this case, a rotational speed of the output shaft may also be increased significantly with respect to a rotational speed of the input shaft. For example, given that the geared transmission unit thus structured is used as a speed increasing apparatus in a powertrain of an electric generator, it is possible to generate electricity efficiently. In addition, the geared transmission unit thus structured may be fitted easily in a linear powertrain.

**BRIEF DESCRIPTION OF THE DRAWINGS**

Features, aspects, and advantages of exemplary embodiments of the present disclosure will become better understood with reference to the following description and accompanying drawings, which should not limit the disclosure in any way.

Fig. 1 is a schematic illustration showing a first embodiment of the geared transmission unit;
Fig. 2 is a cross-sectional view showing a configuration of the geared transmission unit shown in Fig. 1;
Fig. 3 is a nomographic diagram for explaining a speed reducing function of a planetary gear set used in the geared transmission unit.
Fig. 4 is a schematic illustration showing a second embodiment of the geared transmission unit;
Fig. 5 is a cross-sectional view showing a configuration of the geared transmission unit shown in Fig. 4;

Fig. 6 is a schematic illustration showing a third embodiment of the geared transmission unit;

Fig. 7 is a schematic illustration showing a fourth embodiment of the geared transmission unit;

Fig. 8 is a schematic illustration showing a fifth embodiment of the geared transmission unit;

Fig. 9 is a schematic illustration showing a sixth embodiment of the geared transmission unit;

Fig. 10 is a schematic illustration showing a seventh embodiment of the geared transmission unit;

Fig. 11 is a schematic illustration showing an eighth embodiment of the geared transmission unit;

Fig. 12 is a schematic illustration showing a ninth embodiment of the geared transmission unit;

Fig. 13 is a schematic illustration showing a tenth embodiment of the geared transmission unit;

Fig. 14 is a schematic illustration showing an eleventh embodiment of the geared transmission unit;

Fig. 15 is a schematic illustration showing a twelfth embodiment of the geared transmission unit;

Fig. 16 is a schematic illustration showing a thirteenth embodiment of the geared transmission unit;

Fig. 17 is a schematic illustration showing a fourteenth embodiment of the geared transmission unit;

Fig. 18 is a schematic illustration showing a fifteenth embodiment of the geared transmission unit;

Fig. 19 is a schematic illustration showing a sixteenth embodiment of the geared transmission unit;

Fig. 20 is a schematic illustration showing a seventeenth embodiment of the geared transmission unit;

Fig. 21 is a schematic illustration showing an eighteenth embodiment of the geared transmission unit;

Fig. 22 is a schematic illustration showing a nineteenth embodiment of the geared transmission unit; and

Fig. 23 is a nomographic diagram for explaining a speed increasing function of the planetary gear set used in the geared transmission unit.

## DETAILED DESCRIPTION OF THE PREFERRED EMBODIMENT(S)

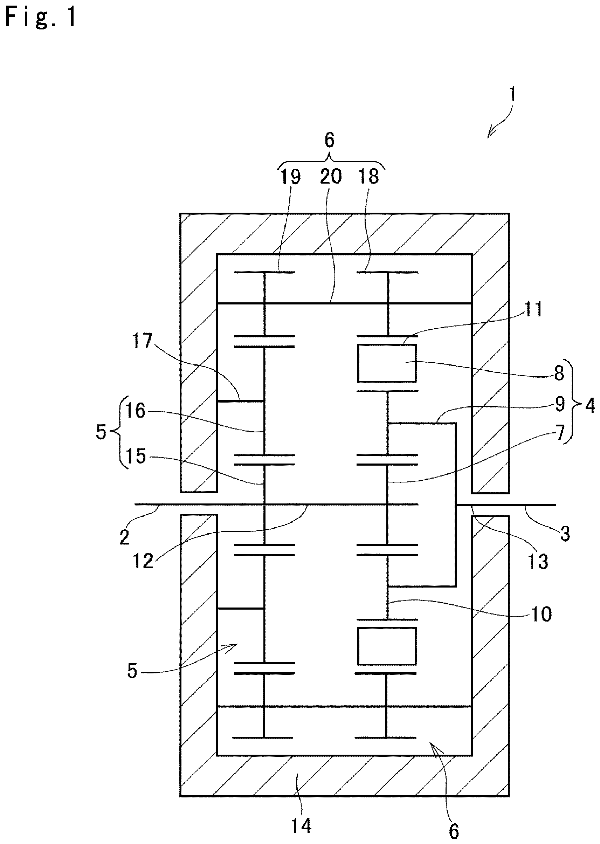

Preferred embodiments of the present disclosure will now be explained with reference to the accompanying drawings. Referring now to Fig. 1, there is shown the first embodiment of the geared transmission unit according to the present disclosure. As shown in Fig. 1, the geared transmission unit 1 includes an input shaft 2, an output shaft 3, a planetary gear set 4, a counter gear set 5 connected to the input shaft 2 or the output shaft 3, and an outer gear set 6 that transmit torque between the planetary gear set 4 and the counter gear set 5. The geared transmission unit 1 reduces a rotational speed between the input shaft 2 and the output shaft 3, and transmits the torque of the input shaft 2 to the output shaft 3.

The planetary gear set 4 which is of single pinion type comprises: a sun gear 7, a ring gear 8, and a carrier 9 as rotary elements that differentially rotate with respect to each other; and a plurality of planetary gears 10 supported by the carrier 9 and interposing between the sun gear 7 and the ring gear 8. An outer peripheral section of the ring gear 8 has formed therein a later-mentioned external gear 11 that engages with a first pinion 18 of the outer gear set 6.

The planetary gear set 4 is supported in a case 14 of the geared transmission unit 1, by a sun gear shaft 12 of the sun gear 7 and a carrier shaft 13 of the carrier 9. The sun gear shaft 12 rotates integrally with the sun gear 7 and a later-mentioned center gear 15, and the carrier shaft 13 rotates integrally with the carrier 9. The sun gear shaft 12 and the carrier shaft 13 are disposed in a manner enabling them to rotate relatively to each other on the common rotational axis. In the geared transmission unit 1 shown in Fig. 1, the input shaft 2 is coupled to the sun gear shaft 12. That is, the sun gear shaft 12 serves as the input shaft 2 in the geared transmission unit 1. On the other hand, the output shaft 3 is coupled to the carrier shaft 13. That is, the carrier shaft 13 serves as the output shaft 3 in the geared transmission unit 1. Thus, in the geared transmission unit 1 shown in Fig. 1, the input shaft 2 and the output shaft 3 are arranged coaxially.

Note that it is also possible for a double pinion type planetary gear unit to be used in the geared transmission unit 1, in place of the single pinion type planetary gear set 4.

The counter gear set 5 includes the center gear 15 and at least one counter gear 16. In the geared transmission unit 1 shown in Fig. 1, the counter gear set 5 includes the center gear 15 and two counter gears 16. The center gear 15 is fitted onto the sun gear shaft 12, and the counter gear 16 is attached in an integrally rotatable manner to the counter gear shaft 17. The counter gear 16 is disposed between the center gear 15 and a second pinion 19 of the outer gear set 6, and engages with both of the center gear 15 and an after-mentioned the second pinion 19.

The outer gear set 6 includes the first pinion 18, the second pinion 19, and a pinion shaft 20. The first pinion 18 is a gear diametrically smaller than the external gear 11, and engages with the external gear 11. The second pinion 19 is also diametrically smaller than the external gear 11 and engages with the counter gear 16. The geared transmission unit 1 of the embodiments of the present disclosure includes at least one set of the above-described kind of outer gear set 6, and the geared transmission unit 1 shown in Fig. 1 includes two sets of the outer gear sets 6. In order for the ring gear 8 to be supported by the outer gear set 6, it is preferable to arrange at least three sets of the outer gear sets 6 at equal intervals in a circumferential direction of the ring gear 8.

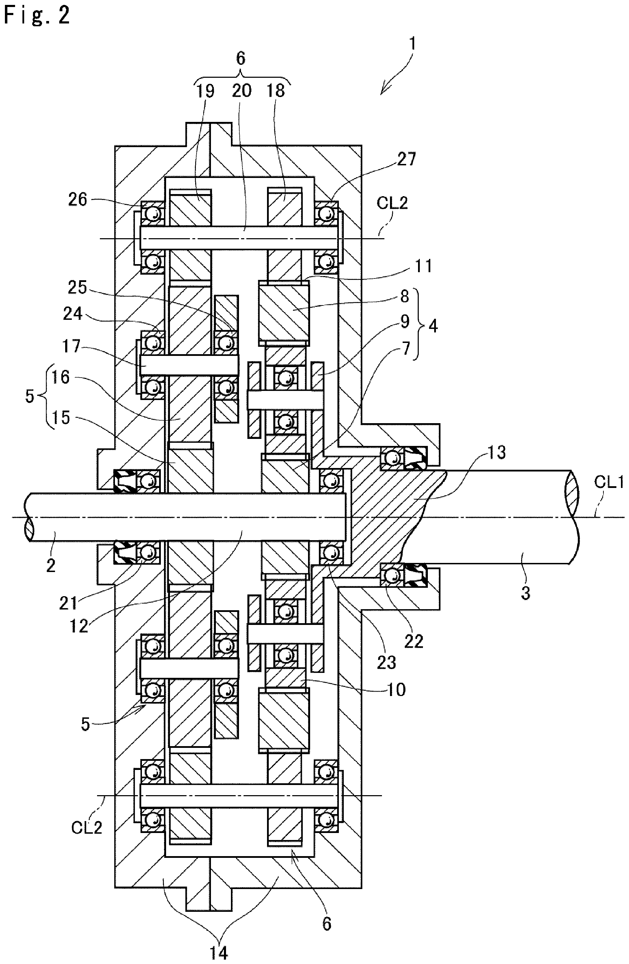

Fig. 2 shows a specific configuration of the geared transmission unit 1 shown in Fig. 1. As described above, the geared transmission unit 1 comprises the input shaft 2, the output shaft 3, the planetary gear set 4, the counter gear set 5, and the outer gear set 6. In the example shown in Figs. 1 and 2, the sun gear shaft 12 is coupled to or integrated with the input shaft 2 to serve as the input shaft 2, and the carrier shaft 13 is coupled to or integrated with the output shaft 3 to serve as the output shaft 3.

The input shaft 2 and the sun gear shaft 12 are supported in a rotatable manner in the case 14, by a bearing 21 installed in the case 14. The output shaft 3 and the carrier shaft 13 are supported in a rotatable manner in the case 14, by a bearing 23 installed in the case 14. An end section on an inner side of the case 14 of the carrier shaft 13 has a bearing 23 installed therein. The sun gear shaft 12 and the carrier shaft 13 are coupled in a manner enabling them to rotate relatively to each other, via that bearing 23. In this way, the input shaft 2 and the output shaft 3 are disposed on the common rotational axis CL1.

The planetary gear set 4 is disposed in parallel with the counter gear set 5 on an inside of the case 14. The sun gear 7 is fitted onto the sun gear shaft 12, and the sun gear shaft 12 is supported in a rotatable manner in the case 14 by the bearing 21. The carrier 9 is formed integrally with the carrier shaft 13, and the carrier shaft 13 is supported in a rotatable manner in the case 14 by the bearing 22. The external gear 11 is formed in the outer peripheral section of the ring gear 8, and the external gear 11 is engaged with the first pinion 18 of the outer gear set 6.

The center gear 15 is also fitted onto the sun gear shaft 12 so as to rotate integrally with the sun gear shaft 12, and the counter gear 16 is fitted onto the counter gear shaft 17 so as to rotate integrally with the counter gear shaft 17. The counter gear shaft 17 is disposed in parallel with the sun gear shaft 12, and is supported in a rotatable manner in the case 14, by a bearing 24 and a bearing 25 installed in the case 14.

The outer gear set 6 is disposed on an outer peripheral side of the planetary gear set 4 and the counter gear set 5. The first pinion 18 is fitted onto the pinion shaft 20 so as to rotate integrally with the pinion shaft 20 and so as to engage with the external gear 11. Similarly, the second pinion 19 is also fitted onto the pinion shaft 20 so as to rotate integrally with the pinion shaft 20 and so as to engage with the counter gear 16. In other words, the first pinion 18 and the second pinion 19 are disposed on the common rotational axis CL2, as shown in Fig. 2. The pinion shaft 20 is disposed in parallel with the sun gear shaft 12, and is supported in a rotatable manner in the case 14, by a bearing 26 and a bearing 27 installed in the case 14. Therefore, the first pinion 18, the second pinion 19, and the pinion shaft 20 of the outer gear set 6 all rotate as one body, and the torque is transmitted between the external gear 11 and the center gear 15 and counter gear 16.

In order to transmit the torque between the external gear 11 and the center gear 15, the geared transmission unit 1 includes at least one set of the outer gear set 6. Specifically, in order for the ring gear 8 to be stably supported by the first pinion 18, at least three sets of the outer gear sets 6 are provided at equal intervals in a periphery of the ring gear 8. Note that the same number of counter gears 16 as the provided number of outer gear sets 6, are provided. For example, given that four sets of the outer gear sets 6 are disposed in the periphery of the ring gear 8, four counter gears 16 are provided so as to respectively engage with four second pinions 19.

In the geared transmission unit 1 shown in Figs. 1 and 2, the torque applied to the center gear 15 can be transmitted to the external gear 11 to rotate the ring gear 8. The torque applied to the carrier 9 may also be transmitted to the center gear 15 to rotate the sun gear 7. Because the sun gear shaft 12 and the input shaft 2 rotate integrally, the torque applied to the input shaft 2 is transmitted directly to the sun gear 7 from the sun gear shaft 12. In this situation, the torque is transmitted between the center gear 15 and the external gear 11, via the counter gear set 5 and the outer gear set 6. Due to the torque transmitted to the external gear 11, the ring gear 8 is caused to rotate in a reverse direction to rotational directions of the center gear 15 and the sun gear 7. As a result, a rotational speed of the carrier 9 is greatly reduced with respect to a rotational speed of the sun gear 7 by differential action of the planetary gear set 4. In other words, a speed reduction ratio between the input shaft 2 and the output shaft 3 can be increased.

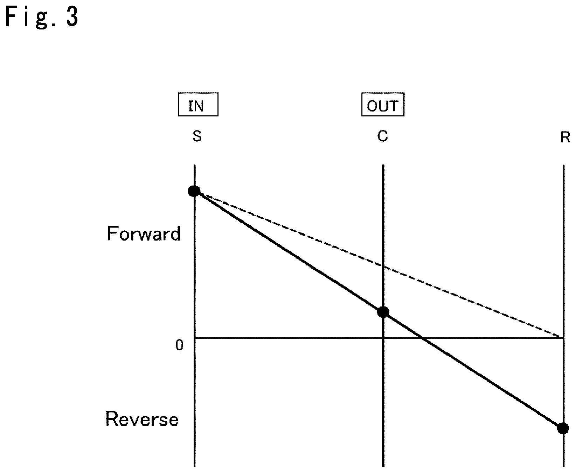

The nomographic diagram of Fig. 3 shows rotational speeds of each of the rotary elements in the planetary gear set 4 in the case where the sun gear 7 is rotated by a torque applied to the input shaft 2 and the sun gear shaft 12. As previously mentioned, the planetary gear set 4 shown in Figs. 1 and 2 is a single pinion type planetary gear unit, the sun gear shaft 12 serves as the input shaft 2, and the carrier shaft 13 serves as the output shaft 3. In the planetary gear set 4, specifically, the sun gear (S) 7 is coupled to the input shaft 2 to serve as an input element (IN), and the carrier (C) 9 is coupled to the output shaft 3 to serve as an output element (OUT).

As shown by the broken line in Fig. 3, in a conventional speed reducing apparatus, a rotational speed of the output element is reduced with respect to a rotational speed of the input element by using the sun gear (S) as the input element (IN) and the carrier (C) as the output element (OUT) while fixing the ring gear (R). In contrast, in the geared transmission unit 1 according to the embodiment in which the sun gear (S) 7 is used as the input element and the carrier (C) 9 is used as the output element, the ring gear (R) 8 rotates in a reverse rotational direction to the rotational directions of the sun gear 7 and the carrier 9. That is, when the sun gear 7 is rotated in a forward direction by the torque of the input shaft 2, the ring gear 8 is rotated in a reverse direction by the torque transmitted from the center gear 15 of the counter gear set 5 to the external gear 11 via the outer gear set 6. As a result of rotating the ring gear 8 in the reverse direction with respect to the rotational direction of the sun gear 7, the rotational speed of the carrier 9 is significantly reduced with respect to the rotational speed of the sun gear 7. Thus, the speed reduction ratio between the input element and the output element in the planetary gear set 4 of the present embodiment shown by the solid line in Fig. 3 is larger than the speed reduction ratio between the input element and the output element in the conventional speed reducing apparatus shown by the broken line in Fig. 3.

Furthermore, since the ring gear 8 is rotated in the reverse direction by the torque applied to the external gear 11, flexibility in setting of a gear ratio increases more compared to in a configuration where power transmission is made by internal teeth of the ring gear as in the previously mentioned combined planetary gear mechanism described in JP-A-2008-275112. As a result, the speed reduction ratio between the input shaft 2 and the output shaft 3 can be significantly increased.

In the single pinion type planetary gear unit in which the sun gear is used as the input element, the carrier is used as the output element, and the ring gear is fixed, the speed reduction ratio $\gamma$ is expressed as:

$$\gamma = 1 + Z_r/Z_s;$$

where $Z_s$ is the number of teeth of the sun gear, and $Z_r$ is the number of internal teeth of the ring gear. Note that the speed reduction ratio $\gamma$ in this case is the ratio of the rotational speed NIN of the input element with respect to the rotational speed NOUT of the output element (that is, $\gamma$ = NIN/NOUT). In the planetary gear unit of this kind, the speed reduction ratio $\gamma$ achievable in stand-alone manner is from about 4 to 10. For example, given that an outer diameter of the planetary gear set is 300 mm, in the combined planetary gear mechanism described in JP-A-2008-275112, a speed reduction ratio $\gamma$ of at most roughly about 100 can be obtained. In contrast, in the geared transmission unit 1 in the embodiments of the present disclosure, there is high flexibility in setting of the gear ratio, without being restricted by the number of internal teeth or inner diameter of the ring gear 8 as described above. Therefore, theoretically, a speed reduction ratio $\gamma$ of roughly about 10000 can be obtained.

Thus, the geared transmission unit 1 in the embodiments of the present disclosure may serve as a speed reducing mechanism that can achieve a speed reduction ratio considerably larger compared to that of a conventional configuration. In the geared transmission unit 1, one set of the planetary gear set 4 and one set of the counter gear set 5 as a parallel gear pair, are arranged in parallel. Therefore, the speed reduction ratio of the geared transmission unit 1 can be significantly increased compared to in the likes of, for example, a speed reducing apparatus due to a conventional combined planetary gear mechanism of the kind described in JP-A-2008-275112 or a speed reducing apparatus due to a two-stage gear train, in the case of equivalent sizes. In other words, the geared transmission unit 1 can be downsized.

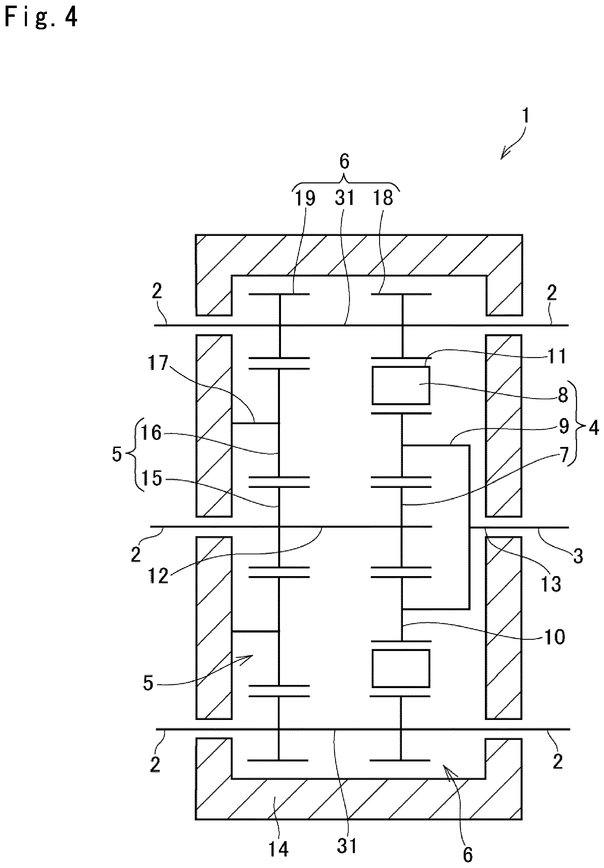

Modification examples of the geared transmission unit 1 are shown in Figs. 4 to 22. As shown in Figs. 1 and 2, in order to rotate the ring gear 8 of the planetary gear set 4 in the counter direction to the rotational direction of the sun gear 7, the geared transmission unit 1 is provided with the outer gear set 6. In the outer gear set 6, the first pinion 18 and the second pinion 19 are fitted onto the pinion shaft 20 so as to rotate the outer gear set 6 integrally. In the geared transmission unit 1, therefore, torque may be applied directly to the pinion shaft 20. That is, the pinion shaft 20 may be used as the input shaft 2 of the geared transmission unit 1. To this end, for example, the pinion shaft 20 may not only be integrated with the input shaft 2 but also be connected to the input shaft 2. Note that in other examples of the geared transmission unit 1 described below, members common to the previously mentioned geared transmission unit 1 shown in Figs. 1 and 2 are assigned with common reference numerals.

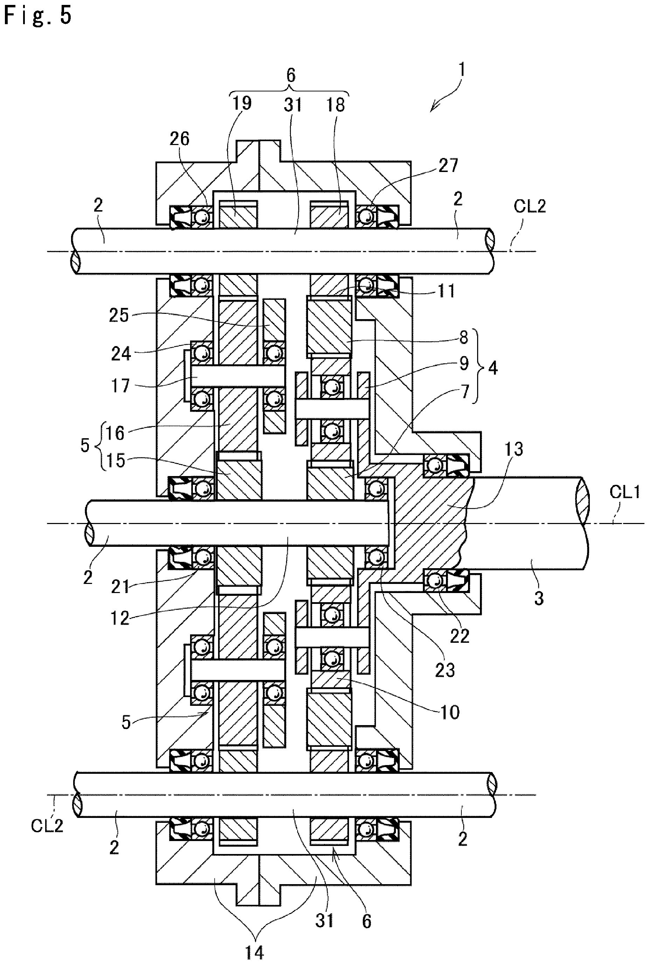

The geared transmission unit 1 shown in Figs. 4 and 5 comprises a plurality of the outer gear sets 6 including a plurality of the first pinions 18, a plurality of the second pinions 19, and a plurality of the pinion shafts 31. Although two sets of the outer gear sets 6 are shown in Figs. 4 and 5, three or more sets of the outer gear sets 6 may be arranged in the geared transmission unit 1 shown in Figs. 4 and 5. The first pinions 18 and the second pinions 19 are attached, respectively, to each of the pinion shafts 31. In addition, a plurality of the input shafts 2 are arranged in the geared transmission unit 1. Both ends of each of the pinion shafts 31 are respectively coupled to the input shafts 2. In other words, the end portions of each of the pinion shafts 31 protruding from the case 14 individually serve as the input shaft 2. That is, in the geared transmission unit 1 shown in Figs. 4 and 5, two pinion shafts 31 respectively serve as the input shafts 2, and the sun gear shaft 12 is connected to the other input shaft 2.

Thus, in the geared transmission unit 1 shown in Figs. 4 and 5, a plurality of the input shafts 2 may be arranged in such a manner as to project from the case 14 in different directions. In other words, the torques may be applied from a plurality of different shafts. Specifically, in the geared transmission unit 1 shown in Figs. 4 and 5 having two pinion shafts 31, a total of five shafts including the sun gear shaft 12 may serve as the input shafts 2. Given that three pinion shafts 31 are arranged in the geared transmission unit 1, a total of seven shafts including the sun gear shaft 12 may serve as the input shafts 2. Given that four pinion shafts 31 are arranged in the geared transmission unit 1, a total of nine shafts including the sun gear shaft 12 may serve as the input shafts 2. Those input shafts 2 are connected respectively to a driving actuator, a braking actuator, a clutch and so on. That is, different kinds of torque such as a driving torque, a braking torque etc. may be applied respectively to the input shafts 2 according to need. For this reason, the geared transmission unit 1 may be applied flexibly to different kinds of powertrains.

In addition, each end of the pinion shaft 31 serving as the input shaft 2 may be connected individually to different kinds of actuators. For example, one end of the predetermined pinion shaft 31 may be connected to a normally used braking actuator that is activated by supplying current thereto, and the other end of the predetermined pinion shaft 31 may be connected to a braking actuator configured such that a braking force can be maintained even when a current supply thereto is stopped. In this case, the geared transmission unit 1 may also serve as a brake unit having a parking brake.

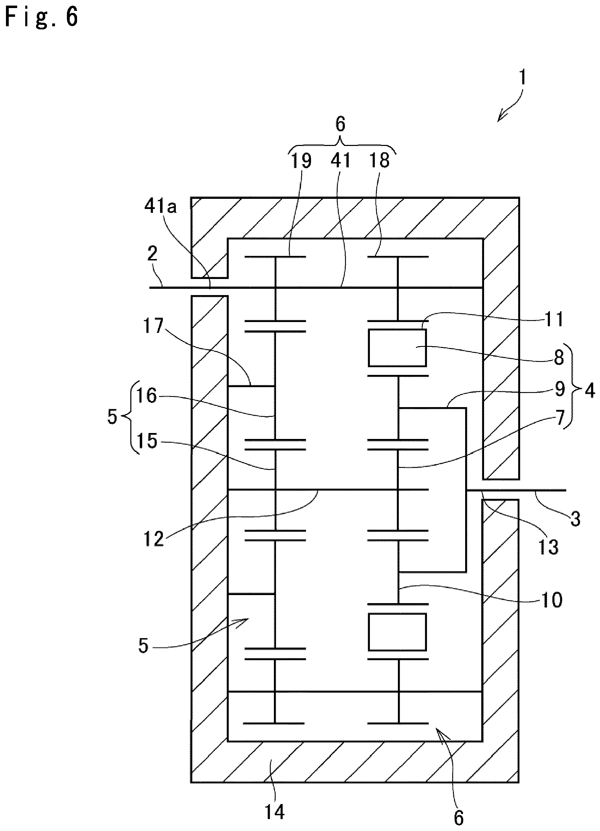

The geared transmission unit 1 shown in Fig. 6 includes at least one set of the outer gear set 6, and two sets of the outer gear sets 6 are shown in Fig. 6. Specifically, two of the first pinions 18, two of the second pinions 19, the pinion shaft 20, and a pinion shaft 41 are arranged in the geared transmission unit 1 shown in Fig. 6. In the geared transmission unit 1 shown in Fig. 6, three or more sets of the outer gear sets 6 may also be arranged. As in the geared transmission unit 1 shown in Figs. 1 and 2, the pinion shaft 20 is also supported in a rotatable manner in the case 14. Both ends of the pinion shaft 41 are also supported in a rotatable manner by the case 14, and the input shaft 2 is coupled to a leading end 41a of the pinion shaft 41 projecting from the case 14 in an opposite direction to a projecting direction of a leading end of the output shaft 3. In other words, the leading end 41a of the pinion shaft 41 serves as the input shaft 2.

Thus, in the geared transmission unit 1 shown in Fig. 6, the input shaft 2 and the output shaft 3 are arranged on different axes. In other words, the input shaft 2 and the output shaft 3 are arranged eccentrically from each other. For this reason, the geared transmission unit 1 may be applied flexibly to different kinds of powertrains.

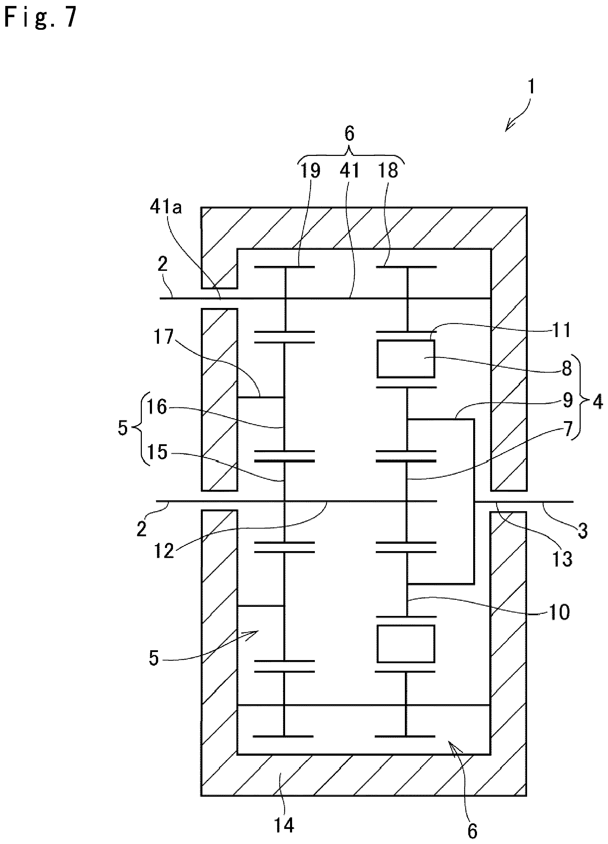

The geared transmission unit 1 shown in Fig. 7 includes two of the input shafts 2, and the pinion shaft 41. In the geared transmission unit 1 shown in Fig. 7, the input shafts 2 are connected respectively to the pinion shaft 41 and the sun gear shaft 12. In other words, a leading end of the sun gear shaft 12 projecting from the case 14 serves as the input shaft 2, and a leading end of the pinion shaft 41 projecting from the case 14 also serves as the input shaft 2.

Thus, in the geared transmission unit 1 shown in Fig. 7, the torques may be applied to each of the input shaft 2 arranged on different axes. For this reason, the geared transmission unit 1 may be applied flexibly to different kinds of powertrains.

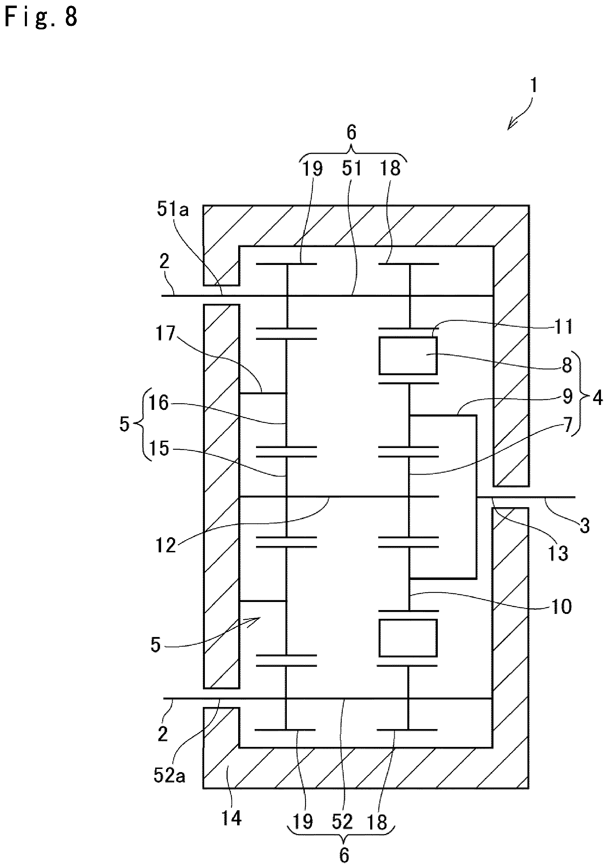

The geared transmission unit 1 shown in Fig. 8 includes a plurality of the input shafts 2, and a plurality of the outer gear sets 6. Specifically, two of the first pinions 18, two of the second pinions 19, a pinion shaft 51, and a pinion shaft 52 are arranged in the geared transmission unit 1 shown in Fig. 8. Three or more sets of the outer gear sets 6 may also be arranged in the geared transmission unit 1 shown in Fig. 8. Both ends of the pinion shaft 51 are supported in a rotatable manner by the case 14, and the input shaft 2 is coupled to a leading end 51a of the pinion shaft 51 projecting from the case 14 in an opposite direction to a projecting direction of the leading end of the output shaft 3. In other words, the leading end 51a of the pinion shaft 51 serves as the input shaft 2. Likewise, both ends of the pinion shaft 52 are supported in a rotatable manner by the case 14, and the input shaft 2 is coupled to a leading end 52a of the pinion shaft 52 projecting from the case 14 in an opposite direction to the projecting direction of the leading end of the output shaft 3. In other words, the leading end 52a of the pinion shaft 52 also serves as the input shaft 2.

Thus, in the geared transmission unit 1 shown in Fig. 8, the input shaft 2 and the output shaft 3 are also arranged on different axes. In other words, the input shaft 2 and the output shaft 3 are also arranged eccentrically from each other. For this reason, the geared transmission unit 1 may be applied flexibly to different kinds of powertrains.

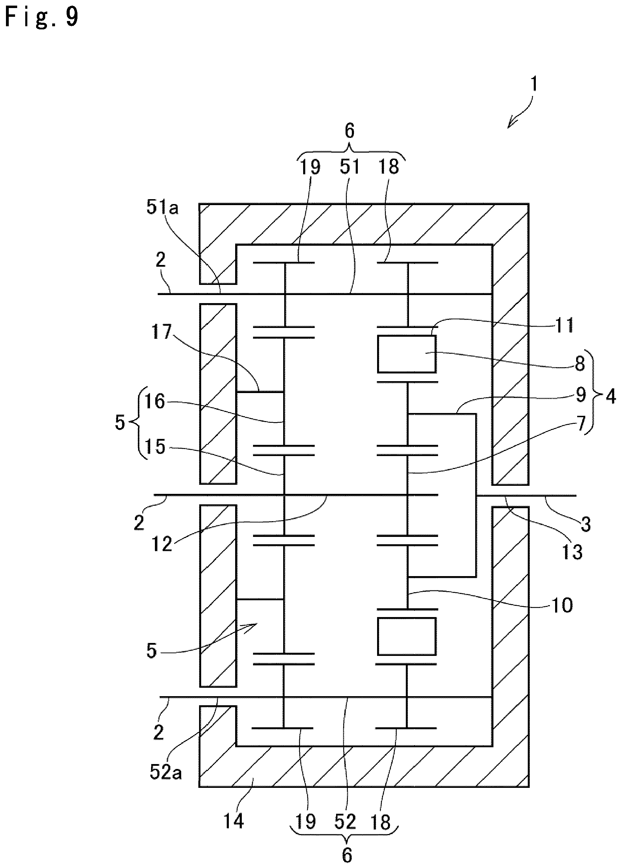

The geared transmission unit 1 shown in Fig. 9 also includes a plurality of the input shafts 2, the pinion shaft 51, and the pinion shaft 52. In the geared transmission unit 1 shown in Fig. 9, the input shafts 2 are connected respectively to the pinion shaft 51, the pinion shaft 52, and the sun gear shaft 12. In other words, the leading end of the sun gear shaft 12 projecting from the case 14 serves as the input shaft 2, and a leading end 51a of the pinion shaft 51 and a leading end 52a of the pinion shaft 52 projecting from the case 14 also serve as the input shafts 2.

Thus, in the geared transmission unit 1 shown in Fig. 9, the torques may be applied to each of the input shaft 2 arranged on different axes. For this reason, the geared transmission unit 1 may be applied flexibly to different kinds of powertrains.

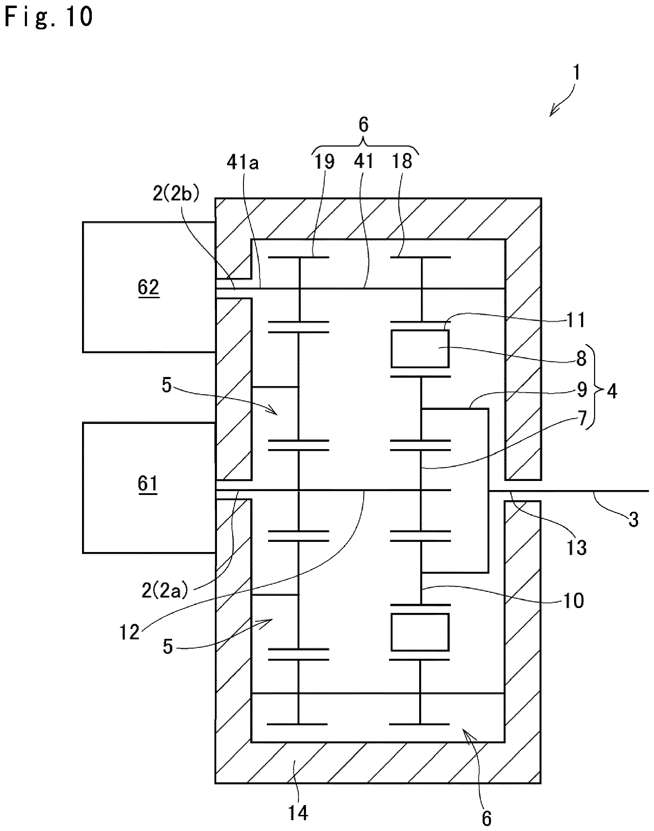

The geared transmission unit 1 thus has been explained may also be used as a drive unit having a braking function. To this end, the geared transmission unit 1 shown in Fig. 10 is provided with a driving actuator 61 that generates a driving torque, and a braking actuator 62 that generates a braking torque. The likes of a permanent magnet type synchronous motor or an induction motor, for example, may be adopted as the driving actuator 61. On the other hand, for example, the likes of an electromagnetic brake that brakes a rotary member due to a magnetic attraction force generated by passage of an electric current, an electric brake that generates a frictional braking force using a feed screw mechanism driven by an electric motor, and a regenerative brake that brakes a rotary member utilizing a resistance force generated when generating electricity by a motor, may be used as the braking actuator 62.

The geared transmission unit 1 shown in Fig. 10 is a modification of the geared transmission unit 1 shown in Fig. 7. In the geared transmission unit 1 shown in Fig. 10, the driving actuator 61 is coupled to a first input shaft 2a integrated with the sun gear shaft 12 so that a driving torque generated by the driving actuator 61 is applied to the first input shaft 2a. On the other hand, the braking actuator 62 is coupled to a second input shaft 2b integrated with the pinion shaft 41 so that a braking torque generated by the braking actuator 65 is applied to the second input shaft 2b.

In the geared transmission unit 1 shown in Fig. 10, a rotational speed of the output shaft 3 is greatly reduced with respect to a rotational speed of the first input shaft 2a driven by the driving actuator 61. That is, a drive torque generated by the driving actuator 61 may be transmitted to the output shaft 3 while being multiplied significantly. In the geared transmission unit 1 shown in Fig. 10, therefore, a highspeed/low-torque type motor may be used as the driving actuator 61. That is, the driving actuator 61 can be downsized. In addition, the output shaft 3 may be halted by applying the braking torque generated by the braking actuator 62 to the second input shaft 2b. For these reasons, a compact drive unit having a braking function may be formed.

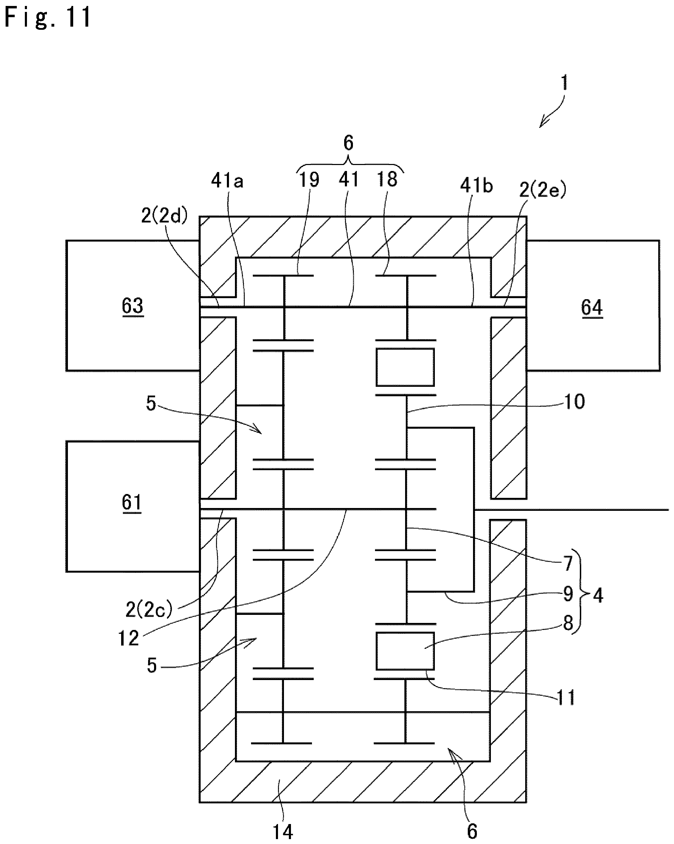

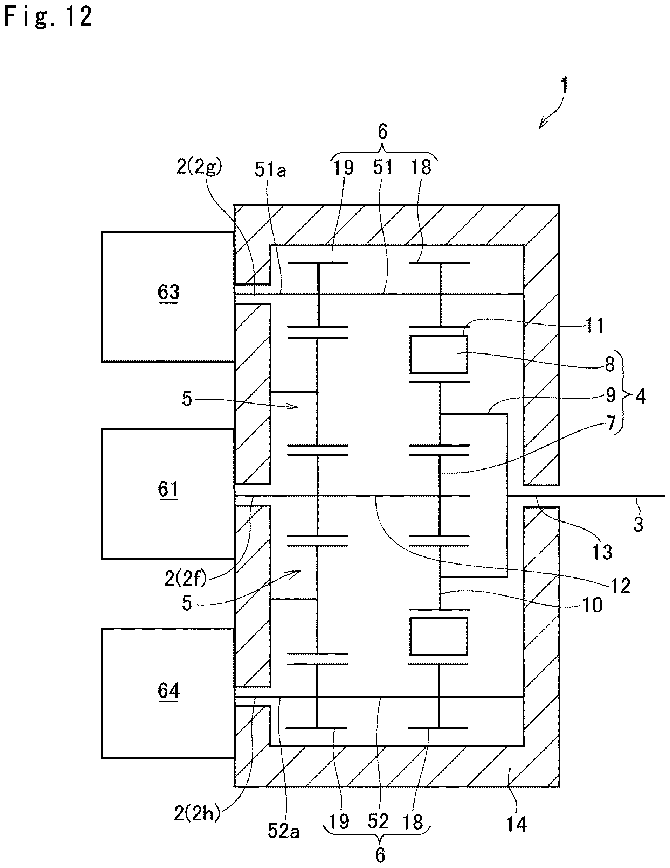

The geared transmission units 1 shown in Figs. 11 and 12 are individually provided with a braking actuator 63 as a normal-use braking actuator, and a braking actuator 64 that can maintain a braking force even when a rotation thereof is stopped. For example, the above-mentioned electromagnetic brake or regenerative brake may be employed as the braking actuator 63, and the above-mentioned electric brake using the feed screw mechanism may be employed as the braking actuator 64. That is, a braking force generated by the braking actuator 64 can be maintained even when a current supply to the braking actuator 64 is stopped.

In the geared transmission unit 1 shown in Fig. 11 as a modification of the geared transmission unit 1 shown in Fig. 7, specifically, the other end 41b of the pinion shaft 41 projecting from the case 14 in the right side of Fig. 11 also serves as the input shaft 2. That is, the geared transmission unit 1 shown in Fig. 11 is provided with a total of three input shafts 2 such as a first input shaft 2c formed on a leading end of the sun gear shaft 12, a second input shaft 2d formed on the leading end 41a of the pinion shaft 41, and a third input shaft 2e formed on the other end 41b of the pinion shaft 41. The driving actuator 61 is coupled to the first input shaft 2c to apply a driving torque to the first input shaft 2c. The braking actuator 63 is coupled to the second input shaft 2d to apply a braking torque to the second input shaft 2d, and the braking actuator 64 is coupled to the third input shaft 2e to apply a braking torque to the third input shaft 2e.

In the geared transmission unit 1 shown in Fig. 12 as a modification of the geared transmission unit 1 shown in Fig. 9, specifically, the leading end of the sun gear shaft 12 projecting from the case 14 serves as a first input shaft 2f, the leading end 51a of the pinion shaft 51 serve as a second input shaft 2g, and the leading end 52a of the pinion shaft 52 serves as a third input shaft 2h. The driving actuator 61 is coupled to the first input shaft 2f to apply a driving torque to the first input shaft 2f, the braking actuator 63 is coupled to the second input shaft 2g to apply a braking torque to the second input shaft 2g, and the braking actuator 64 is coupled to the third input shaft 2h to apply a braking torque to the third input shaft 2h.

In this way, the geared transmission units 1 shown in Figs. 11 and 12 may serve as a drive unit having a braking function and a parking brake.

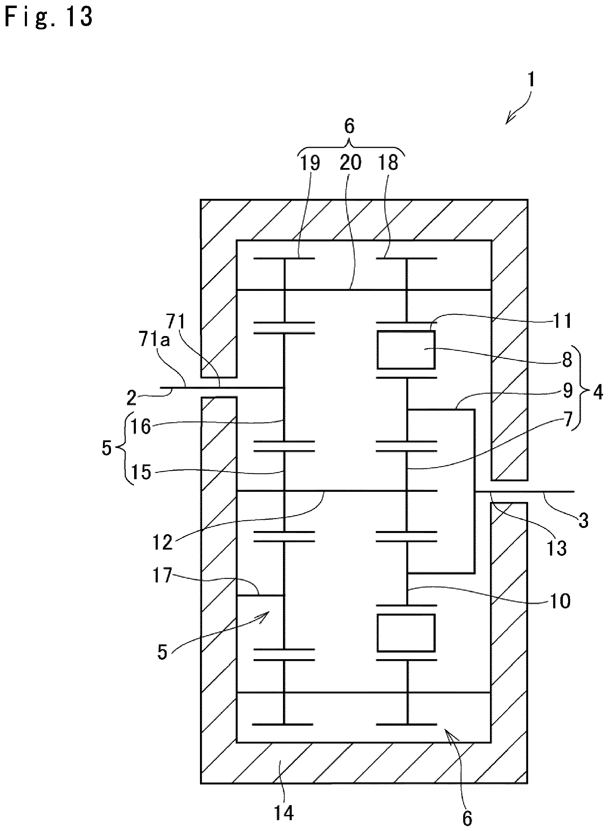

The geared transmission unit 1 shown in Fig. 13 is provided with the counter gear set 5 includes the center gear 15, at least one counter gear 16, the counter gear shaft 17, and a counter gear shaft 71. Although two sets of the counter gear sets 5 are shown in Fig. 13, three or more sets of the counter gear sets 5 may be arranged in the geared transmission unit 1 shown in Fig. 13. In the geared transmission unit 1 shown in Fig. 13, the counter gear shaft 17 and the counter gear shaft 71 are supported in a rotatable manner by the case 14. The input shaft 2 is coupled to a leading end 71a of the counter gear shaft 71 projecting from the case 14 in an opposite direction to the projecting direction of the leading end of the output shaft 3. In other words, the leading end 71a of the counter gear shaft 71 serves as the input shaft 2.

Thus, in the geared transmission unit 1 shown in Fig. 13, the input shaft 2 and the output shaft 3 are arranged on different axes. In other words, the input shaft 2 and the output shaft 3 are arranged eccentrically from each other. For this reason, the geared transmission unit 1 may be applied flexibly to different kinds of powertrains.

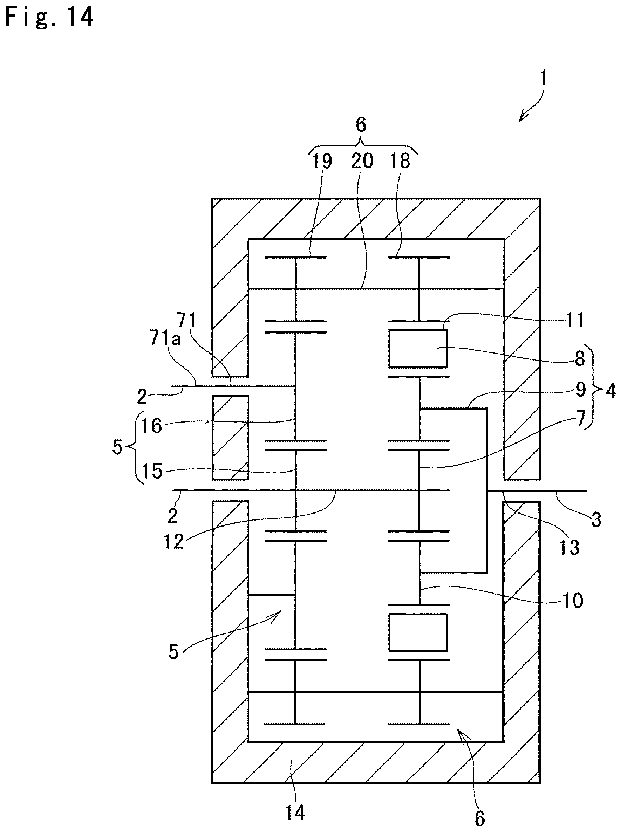

The geared transmission unit 1 shown in Fig. 14 includes two of the input shafts 2, and the counter gear shaft 71. In the geared transmission unit 1 shown in Fig. 14, the input shafts 2 are connected respectively to the counter gear shaft 71 and the sun gear shaft 12. In other words, a leading end of the sun gear shaft 12 projecting from the case 14 serves as the input shaft 2, and a leading end 71a of the counter gear shaft 71 projecting from the case 14 also serves as the input shaft 2.

Thus, in the geared transmission unit 1 shown in Fig. 14, the torques may be applied to each of the input shaft 2 arranged on different axes. For this reason, the geared transmission unit 1 may be applied flexibly to different kinds of powertrains.

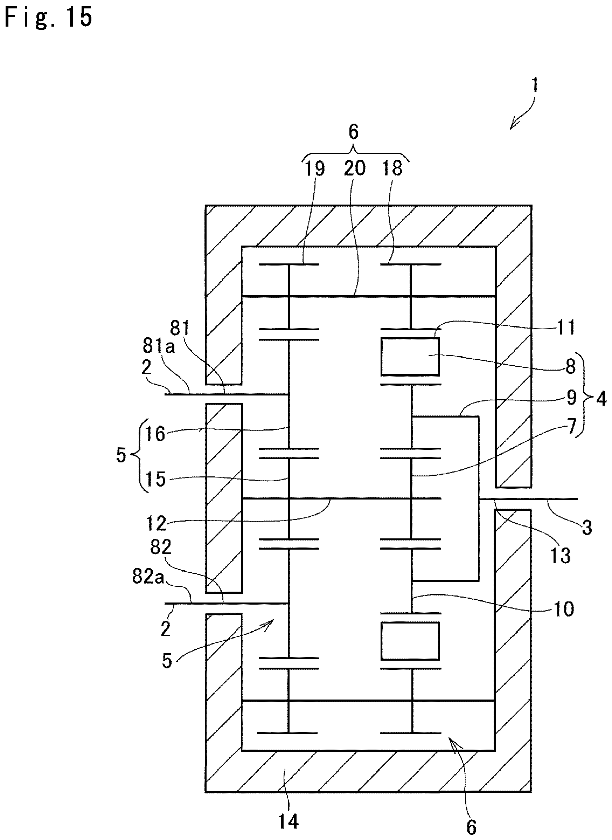

The geared transmission unit 1 shown in Fig. 15 includes a plurality of the input shafts 2, and a plurality of the counter gears 16. Specifically, two of the counter gears 16, a counter gear shaft 81, and a counter gear shaft 82 are arranged in the geared transmission unit 1 shown in Fig. 15. Three or more counter gears 16 may also be arranged in the geared transmission unit 1 shown in Fig. 15. The counter gear shaft 81 is supported in a rotatable manner by the case 14, and the input shaft 2 is coupled to a leading end 81a of the counter gear shaft 81 projecting from the case 14 in an opposite direction to a projecting direction of the leading end of the output shaft 3. In other words, the leading end 81a of the counter gear shaft 81 serves as the input shaft 2. Likewise, the counter gear shaft 82 is also supported in a rotatable manner by the case 14, and the input shaft 2 is coupled to a leading end 82a of the counter gear shaft 81 projecting from the case 14 in an opposite direction to a projecting direction of the leading end of the output shaft 3. In other words, the leading end 81a of the counter gear shaft 81 also serves as the input shaft 2.

Thus, in the geared transmission unit 1 shown in Fig. 15, the input shaft 2 and the output shaft 3 are also arranged on different axes. In other words, the input shaft 2 and the output shaft 3 are also arranged eccentrically from each other. For this reason, the geared transmission unit 1 may be applied flexibly to different kinds of powertrains.

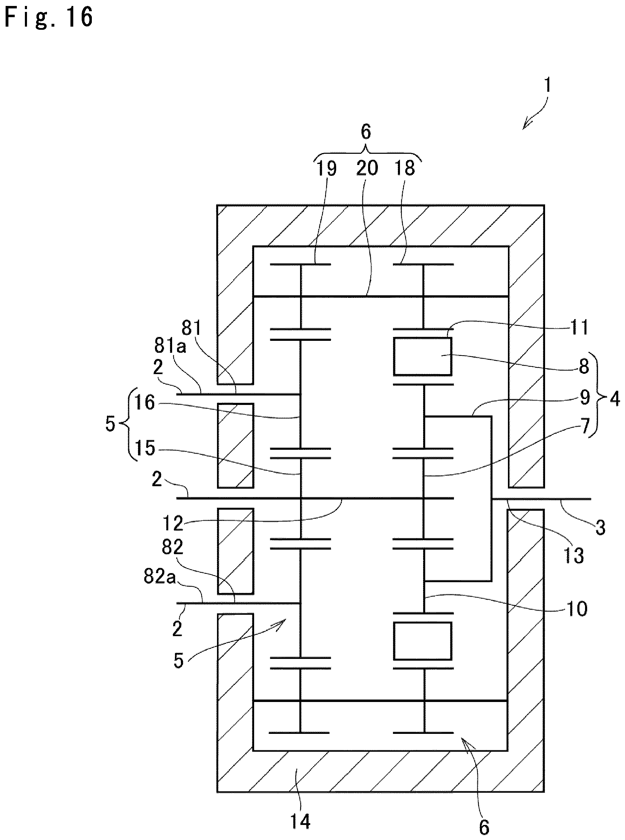

The geared transmission unit 1 shown in Fig. 16 also includes a plurality of the input shafts 2, the counter gear shaft 81, and the counter gear shaft 82. In the geared transmission unit 1 shown in Fig. 16, the input shafts 2 are connected respectively to the counter gear shaft 81, the counter gear shaft 82, and the sun gear shaft 12. In other words, the leading end of the sun gear shaft 12 projecting from the case 14 serves as the input shaft 2, and the leading end 81a of the counter gear shaft 81 and the leading end 82a of the counter gear shaft 82 projecting from the case 14 also serve as the input shafts 2.

Thus, in the geared transmission unit 1 shown in Fig. 16, the torques may be applied to each of the input shaft 2 arranged on different axes. For this reason, the geared transmission unit 1 may be applied flexibly to different kinds of powertrains.

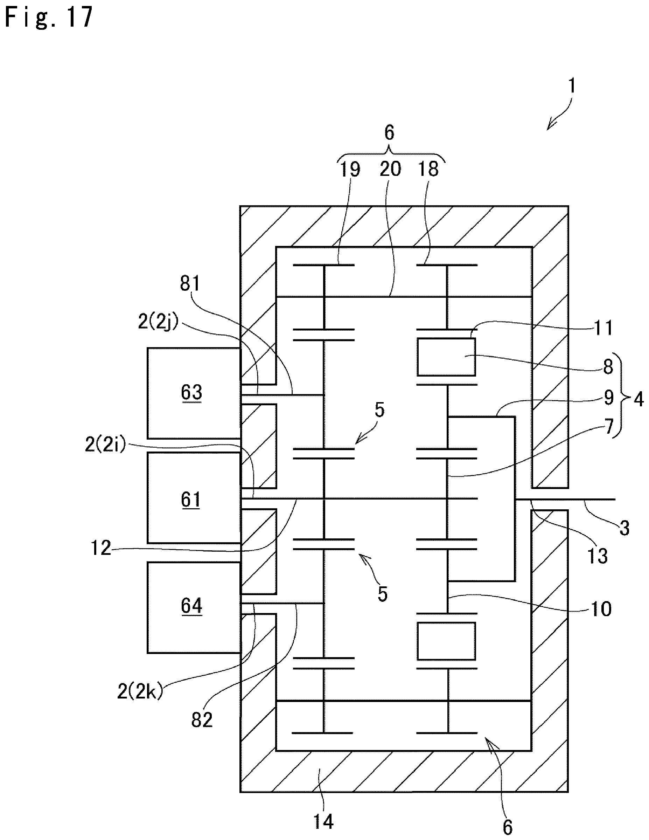

The geared transmission units 1 shown in Figs. 13 to 16 may also be used as a drive unit having a braking function. In the geared transmission unit 1 shown in Fig. 17 as a modification of the geared transmission unit 1 shown in Fig. 16, specifically, the leading end of the sun gear shaft 12 projecting from the case 14 serves as a first input shaft 2i, the leading end 81a of the counter gear shaft 81 serve as a second input shaft 2j, and the leading end 82a of the counter gear shaft 82 serves as a third input shaft 2k. The driving actuator 61 is coupled to the first input shaft 2i to apply a driving torque to the first input shaft 2i, the braking actuator 63 is coupled to the second input shaft 2j to apply a braking torque to the second input shaft 2j, and the braking actuator 64 is coupled to the third input shaft 2k to apply a braking torque to the third input shaft 2k.

In this way, the geared transmission unit 1 shown in Fig. 17 may serve as a drive unit having a braking function and a parking brake.

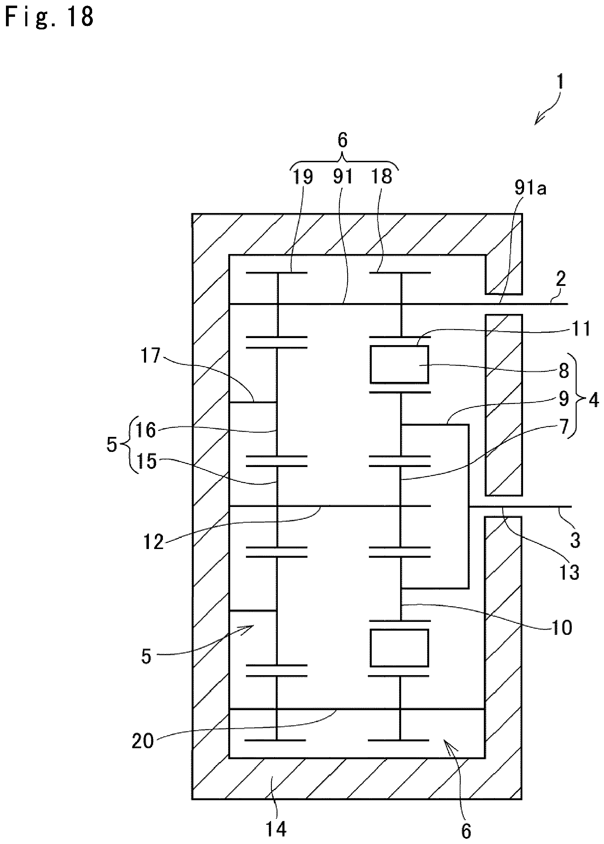

The geared transmission unit 1 shown in Fig. 18 includes at least one set of the outer gear set 6, and two sets of the outer gear sets 6 are shown in Fig. 18. Specifically, two of the first pinions 18, two of the second pinions 19, the pinion shaft 20, and a pinion shaft 91 are arranged in the geared transmission unit 1 shown in Fig. 18. Both ends of the pinion shaft 91 are supported in a rotatable manner by the case 14, and the input shaft 2 is coupled to a leading end 91a of the pinion shaft 91 projecting from the case 14 in a same direction as a projecting direction of the leading end of the output shaft 3. In other words, the leading end 91a of the pinion shaft 91 serves as the input shaft 2.

Thus, in the geared transmission unit 1 shown in Fig. 18, the input shaft 2 and the output shaft 3 project form the case 14 in the same direction. For example, the geared transmission unit 1 shown in Fig. 18 may be used to form an in-wheel motor in which a motor and a driveshaft are arranged inside of a wheel, by coupling the input shaft 2 to the motor and coupling the output shaft to the driveshaft. Otherwise, it is also possible to form a drive unit having two motors by arranging two of the geared transmission unit 1 thus having the motor in such a manner as to have their fellow back surfaces on an opposite side to the input shaft 2 and the output shaft 3 against each other.

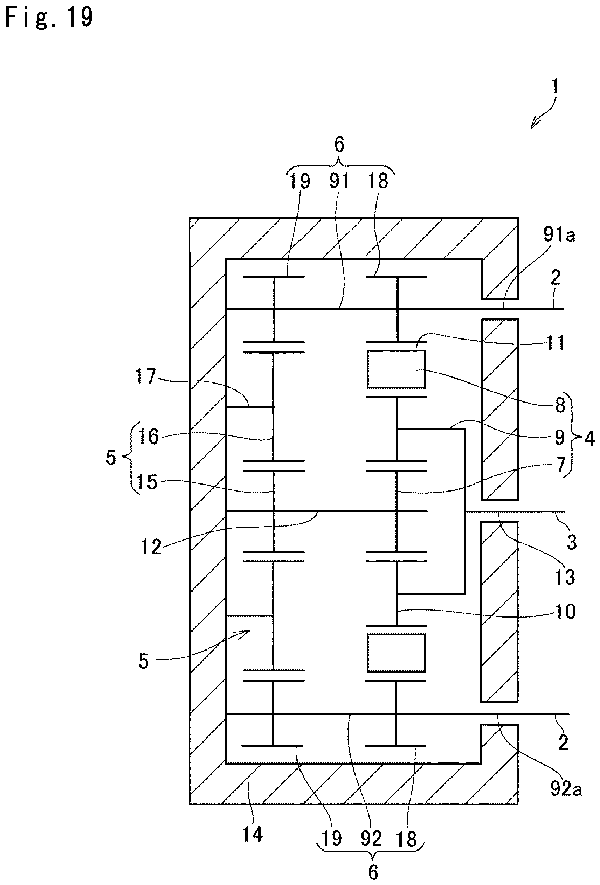

The geared transmission unit 1 shown in Fig. 19 includes a plurality of the input shafts 2, and a plurality of the outer gear sets 6. Specifically, two of the first pinions 18, two of the second pinions 19, a pinion shaft 91, and a pinion shaft 92 are arranged in the geared transmission unit 1 shown in Fig. 19. Three or more sets of the outer gear sets 6 may also be arranged in the geared transmission unit 1 shown in Fig. 19. Both ends of the pinion shaft 91 are supported in a rotatable manner by the case 14, and the input shaft 2 is coupled to a leading end 91a of the pinion shaft 91 projecting from the case 14 in a same direction as the projecting direction of the leading end of the output shaft 3. In other words, the leading end 91a of the pinion shaft 91 serves as the input shaft 2. Likewise, both ends of the pinion shaft 92 are also supported in a rotatable manner by the case 14, and the input shaft 2 is coupled to a leading end 92a of the pinion shaft 92 projecting from the case 14 in a same direction as the projecting direction of the leading end of the output shaft 3. In other words, the leading end 92a of the pinion shaft 92 also serves as the input shaft 2.

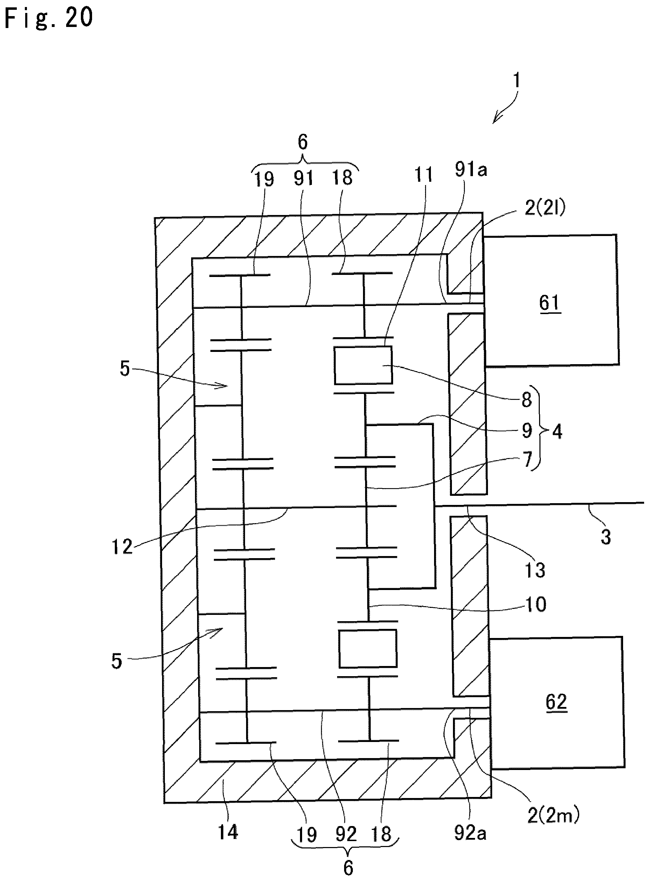

Thus, in the geared transmission unit 1 shown in Fig. 18, the input shaft 2 and the output shaft 3 project form the case 14 in the same direction. The geared transmission unit 1 thus structured may also be used as a drive unit having a braking function. To this end, for example, the geared transmission unit 1 shown in Fig. 20 is provided with the driving actuator 61 and the braking actuator 62. In the geared transmission unit 1 shown in Fig. 20, the driving actuator 61 is coupled to the leading end 91a of the pinion shaft 91 serving as a first input shaft 21 so that a driving torque generated by the driving actuator 61 is applied to the first input shaft 21. On the other hand, the braking actuator 62 is coupled to a leading end 92a of the pinion shaft 92 serving as a second input shaft 2m so that a braking torque generated by the braking actuator 62 is applied to the second input shaft 2m.

In the geared transmission unit 1 shown in Fig. 20, a rotational speed of the output shaft 3 is greatly reduced with respect to a rotational speed of the first input shaft 21 driven by the driving actuator 61. That is, a drive torque generated by the driving actuator 61 may be transmitted to the output shaft 3 while being multiplied significantly. In the geared transmission unit 1 shown in Fig. 10, therefore, the driving actuator 61 can be downsized. In addition, the output shaft 3 may be halted by applying the braking torque generated by the braking actuator 62 to the second input shaft 2m. For these reasons, a compact drive unit having a braking function may be formed.

Further, the geared transmission unit 1 shown in Fig. 20 may also be used to form an in-wheel motor in which the driving actuator 61, the braking actuator 62, and the driveshaft are arranged inside of the wheel. Otherwise, it is also possible to form a drive unit having two motors and a braking function by arranging two of the geared transmission unit 1 shown in Fig. 20 in such a manner as to have their fellow back surfaces on an opposite side to the input shaft 2 and the output shaft 3 against each other.

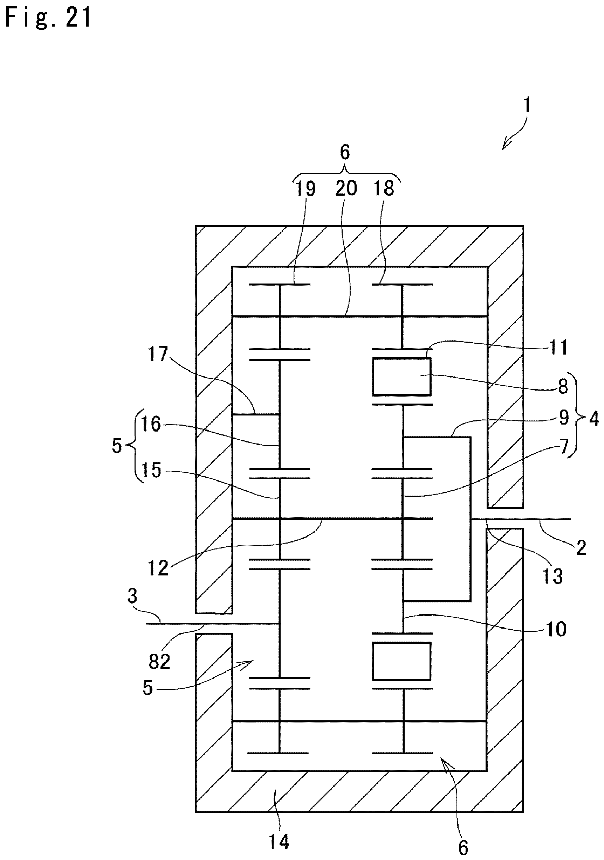

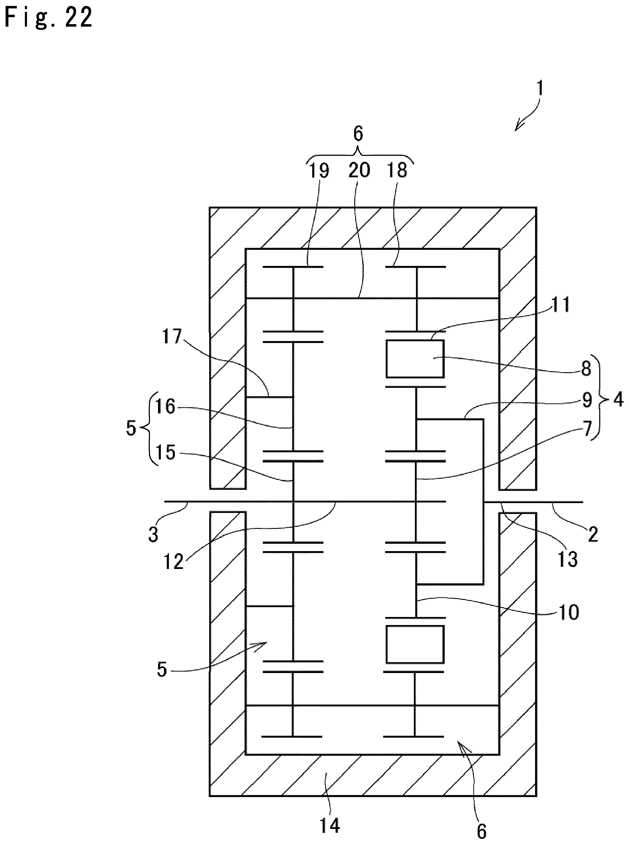

The geared transmission units 1 shown in Figs. 21 and 22 are configured respectively to serve as a speed increasing mechanism. In the geared transmission units 1 shown in Figs. 21 and 22, a leading end of the carrier shaft 13 projects from the case 14 to be coupled to the input shaft 2. In other words, the leading end of the carrier shaft 13 serves as the input shaft 2. In addition, any one of the sun gear shaft 12, the pinion shaft 20, and the counter shaft 17 serves as the output shaft 3. For example, in the geared transmission unit 1 shown in Fig. 21, a counter gear shaft 82 is coupled to the output shat 3. In other words, a leading end of the counter gear shaft 82 projecting from the case 14 serves as the output shaft 3. On the other hand, in the geared transmission unit 1 shown in Fig. 22, the sun gear shaft 12 is coupled to the output shaft 3. In other words, a leading end of the sun gear shaft 12 projecting from the case 14 serves as the output shaft 3.

In the geared transmission unit 1 shown in Fig. 22, torque applied to the input shaft 2 is delivered from the carrier shaft 13 to the sun gear shaft 12 serving as the output shaft 3 through the carrier 9 and the sun gear 7. In this situation, the torque is also transmitted from the center gear 15 to the external gear 11 via the counter gear set 5 and the outer gear set 6 so that the external gear 11 of the ring gear 8 is rotated in a direction opposite to a rotational direction of the sun gear 7 and the center gear 15. Consequently, a rotational speed of the sun gear 7 is significantly increased with respect to a rotational speed of the carrier 9 driven by a differential action of the planetary gear set 4. Thus, in the geared transmission unit 1 shown in Fig. 22, an extremely high speed ratio can be achieved between the input shaft 2 and the output shaft 3. The geared transmission unit 1 shown in Fig. 21 also has such a speed increasing function.

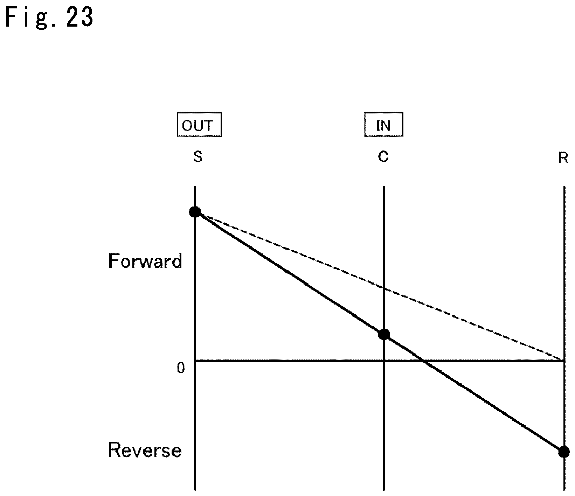

The nomographic diagram of Fig. 23 shows rotational speeds of each of the rotary elements in the planetary gear set 4 in the case where the carrier 9 is rotated by a torque being applied to the carrier shaft 13 serving as the input shaft 2. As previously mentioned, the planetary gear set 4 shown in Fig. 22 is a single pinion type planetary gear unit in which the carrier shaft 13 serves as the input shaft 2, and the sun gear shaft 12 serves as the output shaft 3. In the planetary gear set 4, specifically, the carrier (C) 9 is connected to the input shaft 2 to serve as an input element (IN), and the sun gear (S) 7 is connected to the output shaft 3 to serve as an output element (OUT).

As shown by the broken line in Fig. 23, in the planetary gear unit of this kind, a rotational speed of the output element is increased with respect to a rotational speed of the input element by using the carrier (C) as the input element (IN) and the sun gear (S) as the output element (OUT) while fixing the ring gear (R). In contrast, in the geared transmission unit 1 shown in Fig. 22, in which the carrier (C) 9 is used as the input element and the sun gear (S) 7 is used as the output element, the ring gear (R) 8 rotates in a reverse rotational direction to the rotational directions of the sun gear 7 and the carrier 9. That is, when the carrier 9 is rotated in the forward direction, the ring gear 8 is rotated in a reverse direction by the torque transmitted from the center gear 15 of the counter gear set 5 to the external gear 11 via the outer gear set 6. As a result, the rotational speed of the sun gear 7 is raised by the differential rotation of the ring gear 8 in the reverse direction to be significantly higher than the rotational speed of the carrier 9. Thus, the speed increasing ratio of the geared transmission unit 1 shown in Fig. 22 indicated by the solid line in Fig. 23 is larger than the speed increasing ratio of the conventional speed increasing apparatus indicated by the broken line in Fig. 23.

Thus, the geared transmission units 1 shown in Figs. 21 and 22 may serve as a speed increasing mechanism that can achieve a speed increasing ratio between the input shaft 2 and the output shaft 3 considerably larger compared to that of a conventional configuration in the case of equivalent sizes. In other words, the geared transmission unit 1 can be downsized. Especially, in the geared transmission unit 1 shown in Fig. 22, the input shaft 2 and the output shaft 3 are arranged coaxially. For this reason, the geared transmission unit 1 shown in Fig. 22 may be fitted easily in a linear powertrain.

Although the above exemplary embodiments of the present disclosure have been described, it will be understood by those skilled in the art that the present disclosure should not be limited to the described exemplary embodiments, and various changes and modifications can be made within the scope of the present disclosure.

A geared transmission unit that can increase a speed increasing or reducing ratio without increasing a size of the geared transmission unit. In the geared transmission unit 1, torque is transmitted between an input shaft 2 and an output shaft 3. The geared transmission unit 1, comprises: a planetary gear set 4; an external gear 11 formed around a ring gear 8; a center gear 15 that rotates integrally with the sun gear 7; a sun gear shaft 12 that rotates integrally with the center gear 15 and the sun gear 7; a carrier shaft 13 that rotates integrally with the carrier 9; a first pinion 18 that engages with the external gear 11; a second pinion 19 that rotates integrally with the first pinion 18; a pinion shaft 20 that rotates integrally with the first pinion 18 and the second pinion 19; and a counter gear 16 that engages with the center gear 15 and the second pinion 19. The sun gear shaft 12 or the pinion shaft 20 serves as the input shaft 2, and the carrier shaft 13 serves as the output shaft 3.

**Claims**

1.  A geared transmission unit (1), comprising:

    an input shaft (2);
    an output shaft (3); and
    a planetary gear set (4) that performs a differential action among a sun gear (7), a ring gear (8), and a carrier (9),
    wherein a torque is transmitted between the input shaft (2) and the output shaft (3) while increasing or decreasing a rotational speed,
    **characterized by**:

        an external gear (11) that is formed in an outer peripheral section of the ring gear (8);
        a center gear (15) that is disposed coaxially with the sun gear (7) and rotates integrally with the sun gear (7);
        a sun gear shaft (12) that rotates integrally with the center gear (15) and the sun gear (7);
        a carrier shaft (13) that rotates integrally with the carrier (9);
        a first pinion (18) that engages with the external gear (11);
        a second pinion (19) that is disposed coaxially with the first pinion (18) and rotates integrally with the first pinion (18);
        a pinion shaft (20, 31, 41, 51, 52, 91, 92) that rotates integrally with the first pinion (18) and the second pinion (19);
        a counter gear (16) that is disposed between the center gear (15) and the second pinion (19) and engages with both of the center gear (15) and the second pinion (19); and
        a counter gear shaft (17, 71, 81, 82) that rotates integrally with the counter gear (16).

2.  The geared transmission unit (1) according to claim 1,
    wherein any of the sun gear shaft (12), the pinion shaft (20, 31, 41, 51, 52, 91, 92), and the counter gear shaft (17, 71, 81, 82) serves as any one of the input shaft (2) and the output shaft (3), and wherein the carrier shaft (13) serves as the other one of the input shaft (2) and the output shaft (3).

3.  The geared transmission unit (1) according to claim 2, wherein the sun gear shaft (12) serves as the input shaft (2), and the carrier shaft (13) serves as the output shaft (3).

4.  The geared transmission unit (1) according to claim 2, wherein the pinion shaft (41) serves as the input shaft (2), and the carrier shaft (13) serves as the output shaft (3).

5.  The geared transmission unit (1) according to claim 2, comprising:

        a plurality of the input shafts (2), and
        wherein the sun gear shaft (12) and the pinion shaft (51) respectively serve as the input shaft (2), and the carrier shaft (13) serves as the output shaft (3).

6.  The geared transmission unit (1) according to claim 2, comprising:

        a plurality of the input shafts (2);
        a plurality of the first pinions (18);
        a plurality of the second pinions (19); and
        a plurality of the pinion shafts (51, 52),
        wherein at least two of the pinion shafts (51, 52) serve as the input shafts (2).

7.  The geared transmission unit (1) according to claim 6, wherein the sun gear shaft (12) and at least two of the pinion shafts (41, 51, 52) serve as the input shafts (2).

8.  The geared transmission unit (1) according to any of claims 4 to 7, comprising:

        a plurality of the input shafts (2), and
        wherein both ends of at least one of the pinion shafts (31) serve as the input shafts (2).

9.  The geared transmission unit (1) according to any of claims 2 to 8, wherein the counter gear shaft (71, 81, 82) serves as the input shafts (2), and the carrier shaft (13) serves as the output shaft (3).

10. The geared transmission unit (1) according to claim 9, comprising:

        a plurality of the input shafts (2);
        a plurality of the counter gears (16); and
        a plurality of the counter gear shafts (81, 82);
        wherein the counter gear shafts (81, 82) serve as the input shafts (2).

11. The geared transmission unit (1) according to any of claims 5, 8 and 10, comprising:

    a driving actuator (61) that generates a drive torque; and
    a braking actuator (62, 63, 64) that generates a braking torque,
    wherein the driving actuator (61) is coupled to a first input shaft (2a, 2c, 2f) of a plurality of the input shafts (2), and the braking actuator (62, 63, 64) is coupled to a second input shaft (2b, 2d, 2e, 2g, 2h) of a plurality of the input shafts (2).

12. The geared transmission unit (1) according to claim 4, wherein the pinion shaft (91, 92) projecting in a same direction as a projecting direction of the output shaft (3) serves as the input shaft (2).

13. The geared transmission unit (1) according to claim 4, comprising:

    a plurality of the input shafts (2);
    a plurality of the first pinions (18);
    a plurality of the second pinions (19); and
    a plurality of the pinion shafts (91, 92),
    wherein at least two of the pinion shaft (91, 92) projecting respectively in a same direction as a projecting direction of the output shaft (3) serve as the input shafts (2).

14. The geared transmission unit (1) according to claim 13, comprising:

    a driving actuator (61) that generates a drive torque; and
    a braking actuator (62, 63, 64) that generates a braking torque,
    wherein the driving actuator (61) is coupled to a first input shaft (2i, 21) of a plurality of the input shafts (2), and the braking actuator (62, 63, 64) is coupled to a second input shaft (2j, 2k, 2m) of a plurality of the input shafts (2).

15. The geared transmission unit (1) according to claim 2,
    wherein the carrier shaft (13) serves as the input shaft (2), and
    wherein any of the sun gear shaft (12), the pinion shaft (20, 31, 41, 51, 52), and the counter gear shaft (17, 71, 81, 82) serves as the output shaft (3).

16. The geared transmission unit (1) according to claim 2, wherein the carrier shaft (13) serves as the input shaft (2), and the sun gear shaft (12) serves as the output shaft (3).

Fig. 1

Fig. 2

# Fig. 3

# Fig. 4

Fig. 5

Fig. 6

Fig. 7

Fig. 8

Fig. 9

Fig.10

Fig. 11

Fig.12

Fig. 13

Fig. 14

Fig. 15

Fig. 16

Fig. 17

# Fig. 18

Fig. 19

Fig. 20

Fig. 21

Fig. 22

Fig. 23

**Europäisches Patentamt**

**European Patent Office**

**Office européen des brevets**

## EUROPEAN SEARCH REPORT

Application Number

EP 18 16 9473

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 1 604 112 A (BULTMAN JR FREDERICK H) 26 October 1926 (1926-10-26) | 1-16 | INV. F16H37/08 F16H3/72 |
| Y | * figures 1,2 * | 1-16 | |
| X | DE 10 2014 220475 A1 (ZAHNRADFABRIK FRIEDRICHSHAFEN [DE]) 14 April 2016 (2016-04-14) | 1-16 | |
| Y | * claims 1,4-6; figure 2 * | 1-16 | |

TECHNICAL FIELDS SEARCHED (IPC)

F16H

The present search report has been drawn up for all claims

| Place of search | Date of completion of the search | Examiner |
|---|---|---|
| Munich | 19 September 2018 | Belz, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 16 9473

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2018

| Patent document cited in search report | Publication date | Patent family member(s) | Publication date |
|---|---|---|---|
| US 1604112          A | 26-10-1926 | NONE | |
| DE 102014220475 A1 | 14-04-2016 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017090064 A

- JP 2008275112 A